(19) Europäisches Patentamt
European Patent Office
Office européen des brevets

(11) EP 3 245 246 B1

(12) **EUROPEAN PATENT SPECIFICATION**

(45) Date of publication and mention of the grant of the patent:
**14.08.2019 Bulletin 2019/33**

(21) Application number: **16703010.5**

(22) Date of filing: **14.01.2016**

(51) Int Cl.:
***C08J 7/04*** (2006.01) ***C08J 5/18*** (2006.01)
***C08K 3/34*** (2006.01) ***C08K 5/00*** (2006.01)
***C08K 5/07*** (2006.01)

(86) International application number:
**PCT/US2016/013452**

(87) International publication number:
**WO 2016/115377 (21.07.2016 Gazette 2016/29)**

(54) **GRAPHENE OXIDE BARRIER FILM**

GRAPHENOXIDSPERRFILM

FILM BARRIÈRE À BASE D’OXYDE DE GRAPHÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2015 US 201562103454 P**

(43) Date of publication of application:
**22.11.2017 Bulletin 2017/47**

(73) Proprietor: **Nitto Denko Corporation**
**Osaka 567-8680 (JP)**

(72) Inventors:
- **ZHENG, Shijun**
  **San Diego, CA 92129 (US)**
- **KATAYAMA, Hiroyuki**
  **Ibaraki-shi**
  **Osaka 567-8680 (JP)**
- **SIMAVORYAN, Sergey**
  **San Diego, CA 92122 (US)**

(74) Representative: **Mitchell, Simon James**
**Urquhart-Dykes & Lord LLP**
**Euston House**
**24 Eversholt Street**
**London NW1 1AD (GB)**

(56) References cited:
**WO-A1-96/01736**
**WO-A1-2014/144139**
**US-A1- 2011 200 825**

EP 3 245 246 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### BACKGROUND

### Field of Invention

The present embodiments are related to moisture and/or gas barrier thin films and processes for making same.

### Description of Related Art

In the area of packaging, barrier films may provide a lower-cost method as compared to cans and other packaging. In wide use are nontransparent, metal-based films which consist of metalized polymers or a based on aluminum foil. However, such films typically do not enable customers to view the product to verify quality before purchase. In addition, metal-based packaging may not be microwaveable, limiting the manufacturer's ability to sterilize the product by microwave sterilization. Additional considerations for plastic packaging are desired to avoid chlorine for recycling and a Bisphenol A (BPA) due to market demand and perceived health risks. As a result, current transparent barrier-films consist of Polyvinylidine Chloride (PVDC), PVC, Ethylene Vinyl Alcohol (EVOH), Polyvinyl Alcohol (PVA), low density polyethylene (LDPE), or films with ceramic coatings like Silicone Oxides (SiOx) or Aluminum Oxides (AlOx).

As products require longer shelf-lives, the need for in-packaging sterilization and for packaging to be efficient barriers of oxygen and water have become driving considerations. To help address oxygen permeation into the PET barrier films, three main barrier technologies have been developed: co-injection, coatings, and oxygen scavengers. The resulting barriers tend to be complex products with many layers.

Consequently, there is the need for a low-cost coating with strong barrier properties, high mechanical strength but that is flexible, metal-free and microwaveable.

### SUMMARY

One solution is utilizing a nanocomposite barrier film based on graphene-oxide. It is believed that graphene membranes may be impermeable to standard gases including helium. However, it is also believed that sub-micrometer thick graphene membranes, while practically impermeable to most liquids, vapors, and gases, including helium; allow unimpeded permeation of water. To remedy any water permeability issues, graphene-oxide films may be enhanced with polyvinyl alcohol crystals and amorphous polyvinyl alcohol chains to achieve similar barrier characteristics as in SiOx and AlOx coated film via solution blending. Additionally, graphene-oxide may be functionalized using organic chemistry to enhance the barrier's material properties by making the graphene surface hydrophobic, such as by attachment of amines and the addition of alkyl groups. Silanes are also contemplated for functionalizing graphene by the addition of metalloid polymer hybrids to modify the graphene oxide's electrical chemical properties. Other aspects of functionalizing graphene include using polyvinyl alcohol or polyvinyl chloride. For example, functionalizing using crosslinking polymers polyvinylpyrrolidone and polyvinyl alcohol which may enhance the long term stability of the reduced graphene. Interlayer crosslinking of the graphene to a polymer may a possible solution to improving adhesion to metal surfaces or for the purpose of increasing water resistance.

Applications of graphene oxide include using simple graphene layers to address gas permeability or using barrier films comprising a polymer matrix or elastomers with "functional" graphene made from thermally exfoliating the graphene into graphene sheets to address both gas and water permeability. Graphene coating applications range from food applications to a resin used to coat fabric in tire applications. Other applications include forming a flexible barrier by applying the graphene coating on a flexible substrate. Some methods of synthesizing graphene include making graphene nanoplatelets by the chemical reduction of graphite oxide nanoplatelets in-situ in a dispersing medium in the presence of a reducing agent and a polymer. As a result of fungible-product packing requirements, there is the continuing need for a simple barrier that is cheap to manufacture but meets permeability requirements.

US 2011/200825 (Chakraborty Soma et al.) describes a composite includes a substrate, a binder layer disposed on a surface of the substrate; and a nanofiller layer comprising nanographene and disposed on a surface of the binder layer opposite the substrate. In addition, a nano-coating layer for coating a substrate includes multiple alternating layers of the binder layer and the nanofiller layer. Articles coated with the nano-coating layer prepared from alternating layers of nanofiller layer and binder layer have improved barrier properties, and may be used in down-hole applications.

WO96/01736 (Mobil Oil Corp.) describes a polymeric film structure having improved oxygen, flavor/odor, grease/oil and moisture barrier characteristics. The structure includes a polymeric substrate adapted to receive an oxygen barrier on one side thereof and a moisture barrier on the other side of the oxygen barrier, or a polymeric core sandwiched between an oxygen barrier on one side thereof and a moisture barrier on the other side of the polymeric core. The oxygen barrier includes polyvinyl alcohol cross-linked with aldehyde containing cross-linking agents in the

presence of a catalytic amount of inorganic acid, e.g., sulfuric acid. The moisture barrier is cellulosic material, preferably box board; metallized polymeric composite, preferably metallized oriented polypropylene; or a coating of polyvinylidene chloride.

WO 2014/144139 (Xolve, Inc.) describes technology relating to polymer-graphene nanocomposites and particularly, but not exclusively, to methods for producing polymer-graphene nanocomposites using master batches comprising graphene and a polymer or polymer precursor. The resulting polymer-graphene nanocomposites comprise a high degree of exfoliation and dispersion of graphene nanoplatelets within the polymer matrix.

SUMMARY

The present embodiments include a nanocomposite barrier film that is useful in applications where gas, vapor, and/or fluid permeability are required to be minimized, such as in food packaging applications.

There is provided a barrier film comprising a crosslinked composition comprising a graphene oxide, a polyvinyl alcohol polymer, and a crosslinking group; wherein the crosslinking group connects a graphene oxide platelet to the polyvinyl alcohol, and the crosslinking group is formed from a tetraalkyl orthosilicate, an alkyl dialdehyde, or by exposing the graphene oxide and the polymer to UV radiation without a crosslinker; whereby the film is a barrier to the passage of moisture and gases. Examples of tetraalkyl orthosilicates include tetraethyl orthosilicates, tetramethyl orthosilicates, tetraisopropyl orthosilicates, and/or tetra-*t*-butyl orthosilicates. Examples of alkyl dialdehydes include succinaldehyde, glutaraldehyde and/or adipaldehyde. In some embodiments, the graphene may comprise a functional group such as an amide, a sulfonyl, a carbonyl, an alkylamino, or an alkoxy. In some embodiments, the graphene may be a reduced graphene oxide and/or a graphene oxide. In some embodiments, the mass percentage of graphene relative to the total composition may be between about 0.001% wt. and about 20% wt.

Some embodiments include a gas-barrier barrier device comprising the gas-barrier film described above. This device may further comprise a substrate, upon which the barrier film is disposed. Some barrier films may further comprise a protective coating is disposed upon the barrier film.

Some embodiments include a method for making a transparent, nano-composite, moisture-and-gas barrier film comprising: mixing a polymer solution, a graphene oxide solution, and a crosslinker solution to create an aqueous mixture; blade coating the mixture on a substrate; drying the coated mixture for about 15 minutes to about 72 hours at a temperature ranging from 20 °C to about 120 °C; annealing the resulting coating for about 10 hours to about 72 hours at a temperature ranging from about 40 °C to about 200 °C to create a thin film of between about 5 μm to about 30 μm. In some embodiments, the method further comprises adding a sufficient amount of acid to effect a hydrolysis condensation. In some embodiments, the method further comprises irradiating the barrier film with UV-radiation for 15 minutes to 15 hours at a surface intensity of about 0.001 W/cm$^2$ to about 100 W/cm$^2$. In some embodiments, the method further comprises coating the resulting barrier film with a protecting coating to yield a barrier device. In some embodiments, the method further comprises coating the resulting barrier film with a protecting coating to yield a barrier device.

These and other embodiments are described in greater detail below.

## BRIEF DESCRIPTION OF THE DRAWINGS

FIGS. 1A-1C are depictions of three possible embodiments of a nanocomposite barrier device that may be used in barrier applications.

FIG. 2 is one possible embodiment for the process for making a nanocomposite barrier film and/or device.

## DETAILED DESCRIPTION

As used herein the term "($C_X$-$C_Y$)" refers to a carbon chain having from X to Y carbon atoms. For example, $C_{1-12}$ alkyl or $C_1$-$C_{12}$ alkyl includes fully saturated hydrocarbon containing 1, 2, 3, 4, 5, 6, 7, 8, 9, 10, 11, or 12 carbon atoms.

As used herein the term "C-C moiety" refers to a molecule that is crosslinked by at least two carbon bonds, for any order of the aforementioned bonds.

As used herein, the term "C-N moiety" refers to a molecule that is crosslinked by at least one carbon bond and at least one nitrogen bond, for any order of the aforementioned bonds.

As used herein, the term "C-O moiety" refers to a molecule that is crosslinked by at least one carbon bond and at least one oxygen bond, for any order of the aforementioned bonds.

As used herein, the term "C-S moiety" refers to a molecule that is crosslinked by at least one carbon bond and at least one sulfur bond, for any order of the aforementioned bonds.

As used herein, the term "C-Si moiety" refers to a molecule that is crosslinked by at least one carbon bond and at least one silicone bond, for any order of the aforementioned bonds.

Structures associated with some of the chemical names referred to herein are depicted below.

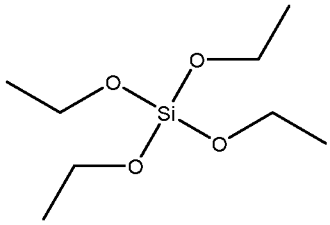

Tetraethyl orthosilicate

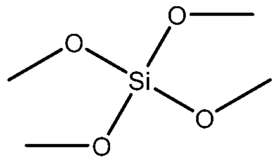

Tetramethyl orthosilicate

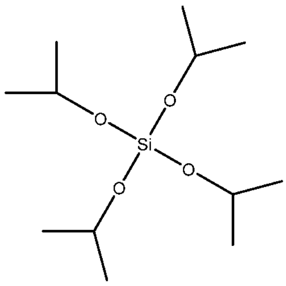

Tetraisopropyl orthosilicate

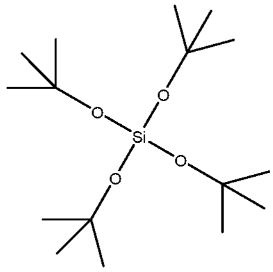

Tetra-tert butyl orthosilicate

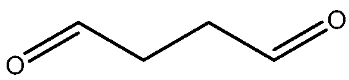

Succinaldehyde

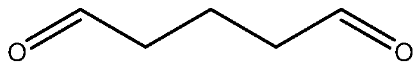

glutaraldehyde

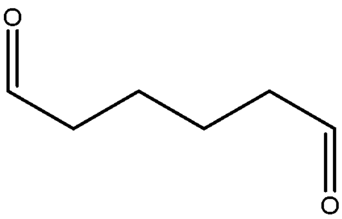

adipaldehyde

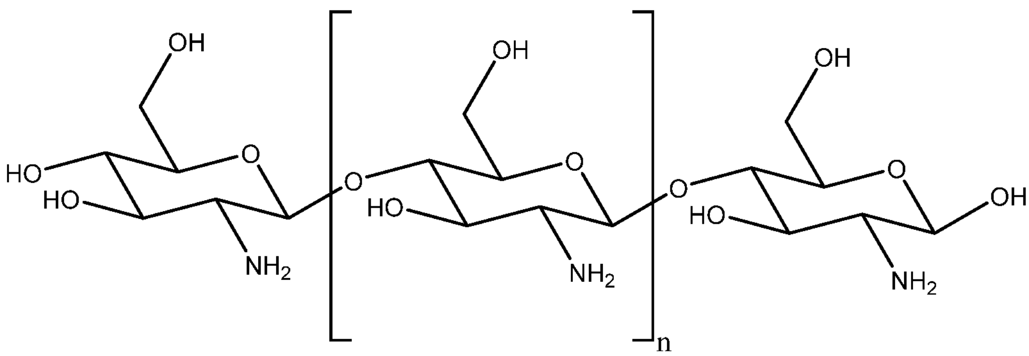

chitosan

In some embodiments, a transparent, nanocomposite, moisture-and-gas barrier film containing graphene may provide desired gas, fluid, and/or vapor permeability resistance. In some embodiments, the barrier film may comprise multiple layers, where at least one layer is a layer containing graphene.

In some embodiments, the gas permeability may be less than 0.100 cc/$m^2$-day, 0.010 cc/$m^2$-day, and/or 0.005 cc/$m^2$-day. A suitable method for determining gas permeability is disclosed in U.S. Patent Publication No. 2014/0272,350, ASTM International Standards D3985, F1307, 1249, F2622, and/or F1927,.

In some embodiments, the moisture permeability may be less than 10.0 gm/$m^2$-day, 5.0 gm/$m^2$-day, 3.0 gm/$m^2$-day, and/or 2.5 gm/$m^2$-day. In some embodiments, the moisture permeability may be measured water vapor permeability/transfer rate at the above described levels. Suitable methods for determining moisture (water vapor) permeability are disclosed in Caria, P. F., Ca test of Al2O3 gas diffusion barriers grown by atomic deposition on polymers, Applied Physics Letters Nos. 89 and 031915-1 to 031915-3 (2006), ASTM International Standards D7709, F1249, 398 and/or E96,

In some embodiments, the visible light transmission (%T) of the barrier film may be at least 60%T, at least 70%T, at least 80%T, at least 85%T, or about 80-90%T. In some embodiments, the barrier film has a transparency of at least about 80%T. A suitable method for determining visible light transparency is disclosed in U.S. Patent No. 8,169,136,

In some embodiments, the barrier film comprises graphene, a polymer, and covalent linkages between the graphene and the polymer. In some embodiments, the graphene may be arranged amongst the polymer. In some embodiments, the barrier film further comprises a crosslinker material.

In some embodiments, the barrier film comprises a graphene, a polymer, and a covalent linkage between the graphene and the polymer. In some embodiments, a polymer molecule may be covalently linked, or crosslinked, to itself and/or other polymer molecules. In some embodiments, some of the graphene molecules may be covalently linked to the same or other graphene molecules or platelets. In some embodiments, the covalent linkages may be at least one, any and/or all of the aforedescribed covalent linkages. In some embodiments, the barrier film further comprises a crosslinker material.

In some embodiments, the graphene may be arranged in the polymer in such a manner as to create an exfoliated nanocomposite, an intercalated nanocomposite, or a phase-separated microcomposite. A phase-separated microcomposite phase may be when, although mixed, the graphene exists as separate and distinct phases apart from the polymer. An intercalated nanocomposite may be when the polymer compounds begin to intermingle amongst or between the graphene platelets, but the graphene may not be distributed throughout the polymer. In an exfoliated nanocomposite phase, the individual graphene platelets may be distributed within or throughout the polymer. An exfoliated nanocomposite phase may be achieved by chemically exfoliating the graphene by a modified Hummer's method. In some embodiments, the majority of the graphene may be staggered to create an exfoliated nanocomposite as a dominant material phase. In some embodiments, the graphene may be separated by about 10 nm about 50 nm, 100 nm to about 500 nm, about 1 micron, or any other distances bounded by any of these values.

In some embodiments, the graphene may be in the form of sheets, planes or flakes. In some embodiments, the graphene may have a surface area of between about 100 $m^2$/gm to about 5000 $m^2$/gm, about 150 $m^2$/gm to about 4000 $m^2$/gm, about 200 $m^2$/gm to about 1000 $m^2$/gm, about 400 $m^2$/gm to about 500 $m^2$/gm, or any other surface area bound by these values.

A graphene may be unmodified graphene, or may be modified, such as an oxidized, chemically modified, or functionalized graphene. Unmodified graphene contains only carbon, except that hydrogen atoms may be covalently attached to carbon atoms at the edge of a graphene molecule or platelet. Modified graphene includes any graphene having an atom other than carbon or hydrogen (such as an O, Si, S, N, C, F, Cl, etc.) in any position. Modified graphene also includes a graphene having hydrogen in any position other than on the edge of a graphene molecule or platelet, such as a hydrogen attached to an interior carbon, for example, to a carbon atom that would otherwise be conjugated to other carbon atoms on the graphene.

Oxidized graphene includes any graphene containing only functional groups containing oxygen, and potentially carbon and hydrogen, such as -O-, -OH, - $CO_2H$, -COH, -CO-, etc. Examples of oxidized graphene include graphene oxide and reduced graphene oxide.

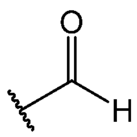

-COH

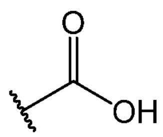

$-CO_2H$

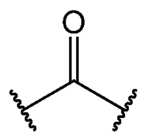

-CO-

Functionalized graphene includes any functional group containing an atom other than C, O, and H, such as Si,

S, N, C, F, Cl, etc. Functionalized graphene also includes non-graphene hydrocarbon moieties such as alkyl, alkenyl, etc., which may be covalently attached to a graphene platelet.

In some embodiments, the graphene may not modified and comprises a non-functionalized graphene base. In some embodiments, the graphene may comprise a modified graphene. In some embodiments, the modified graphene may comprise a functionalized graphene. In some embodiments, more than about 90%, about 80%, about 70%, about 60% about 50%, about 40%, about 30%, about 20%, about 10%, or any other percentage bound by these values, of the graphene is functionalized. In other embodiments, the majority of graphene may be functionalized. In still other embodiments, all the graphene may be functionalized. In some embodiments, the functionalized graphene may comprise a graphene base, such as graphene or an oxidized graphene, and functional group. In some embodiments, the graphene base may be selected from reduced graphene oxide and/or graphene oxide. In some embodiments, the graphene base may be:

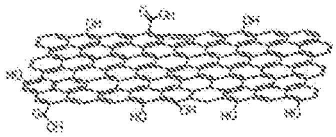

reduced Graphene Oxide [RGO],

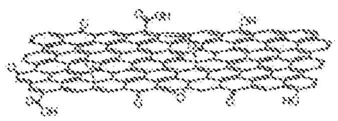

Graphene oxide [GO], and/or

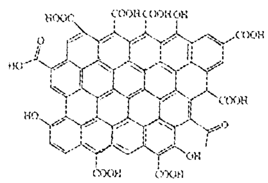

.

In some embodiments, multiple types of functional groups are used to functionalize the graphene. In other embodiments, only one type of functional group may be utilized. In some embodiments, the functional groups are an amino group, an amido group, a sulfonyl group, a carbonyl group, an ether-based group, and/or a silane-based group. In some embodiments, the amido group may be:

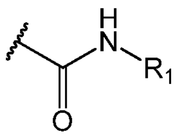 or 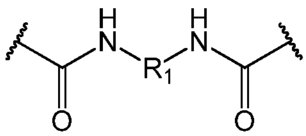 ,

where $R_1$ is H, a bond, or $C_{1-12}$ alkyl.

In some embodiments, the graphene contains a silane-based group, such as a moiety based on the silane tetraethyl orthosilicate (TEOS). In some embodiments, the silane-based group may be:

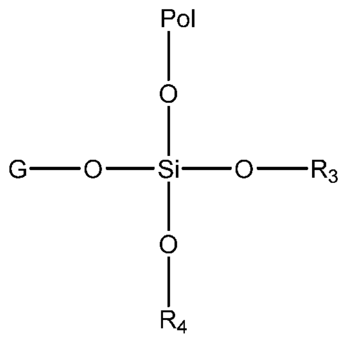

wherein G is a graphene platelet, $R_3$ and $R_4$ may be independently H, $C_2H_5$, or a polymer; Pol is a polymer containing reactive oxygen groups, such as -OH, $CO_2H$, etc. (e.g. polyvinyl alcohol, polyacrylic acid, etc.).

In some embodiments, after crosslinking, the silane-based group may be represented within a structure such as:

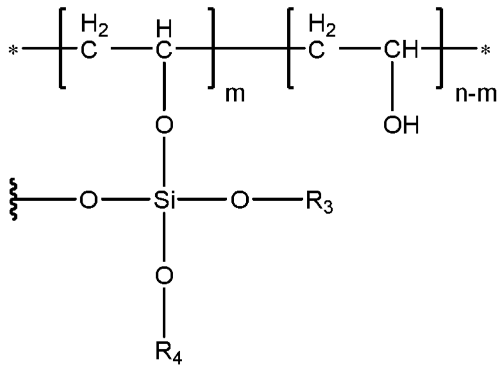

For example, the crosslinking group may be the $SiO_2(OR_3)(OR_4)$ moiety. With respect to the formula above, 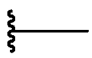 indicates attachment to a graphene and * indicates hydrogen, a capping group, or another type of polymer, n and m may independently be 0, 1, 2, 3, 4, 5, 6, 7, 8, 9, 10, 11, or 12, and $R_3$ and $R_4$ may be independently H, $C_2H_5$, or a polymer. In some embodiments, n ≥ m. In some embodiments, the polymer may comprise PVA.

In some embodiments, the mass percentage of the graphene base, e.g. the total amount of graphene and oxidized graphene, relative to the total composition of the graphene containing layer may be between about 0.0001 % wt. to about 75% wt., about 0.001 % wt. to about 20% wt., about 0.1% wt. to about 1% wt., or any other percentage bound by any of these values.

If desired, the graphene may be crosslinked. For example, a graphene platelet may be crosslinked to one or more other graphene platelets by a crosslinking group or a bridge. While not wanting to be limited by theory, it is believed that crosslinking the graphene may enhance the barrier film's barrier properties by creating additional structural impediments amongst the polymer to hinder the flow of water and thus improve moisture barrier performance. In some embodiments, the graphene may comprise crosslinked graphene such that at least about 1% wt., about 5% wt., about 10% wt., about, 20% wt., about 30% wt., about 40% wt., about 50% wt., about 60% wt., about 70% wt., about 80% wt., about 90% wt., about 95% wt. 100 % wt. or any other percentage bound by these valuses of the graphene may be crosslinked. In some embodiments, the majority of the graphene may be also crosslinked. In some embodiments, some of the graphene may be crosslinked such that at least 5% of the graphene platelets are crosslinked with other graphene platelets. The amount of crosslinking may be estimated by the wt.% of the crosslinker/precursor as compared with the total amount of polymer present. In some embodiments, one or more of the graphene base(s) that are crosslinked may also be functionalized. In some embodiments, the graphene may comprise both crosslinked graphene and non-crosslinked, functionalized graphene.

In some embodiments, the polymer may be a crosslinked polymer, where the polymer may be crosslinked within the same polymer and/or with a different polymer by a crosslinking group or bridge. In some embodiments, the polymer may comprise a crystalline polymer, an amorphous polymer, or a combination of a crystalline and an amorphous polymer. While not wanting to be limited by theory, it is believed that the polymer crystals and chains may be intercalated between the graphene sheets may provide separation of the sheets, and/or mechanical and chemical barriers to intruding fluid resulting in increased gas barrier properties. In some embodiments, the polymer may comprise any combination

of vinyl polymers and biopolymers with the exception of elastomeric rubber and activated rubber. In some embodiments, vinyl polymers may include but are not limited to polyvinyl butyral (PVB), polyvinyl alcohol (PVA), polyvinyl chloride (PVC), polyvinyl acetate (PVAC), polyacrylonitrile, ethylene vinyl alcohol (EVOH), and copolymers thereof; polyethyleneimine; polymethyl methacrylate (PMMA); vinyl chloride-acetate; and combinations thereof. In some embodiments, the vinyl polymer may comprise PVA. In some embodiments, the biopolymers may include but are not limited to: a polysaccharide (such as starch or cellulose, or a derivative thereof) a collagen, hydrolyzed collagen or gelatin, acrylic gelatin, tris-acryl gelatin, chitosan, and or proteins such as milk or whey proteins, or combinations thereof. Whey protein may be a mixture of about 65% beta-lactoglobulin, about 25% alpha-lactalbumin, and/or about 8% serum albumin. In some embodiments, the gelatin may be either type A and type B gelatin or a mixture of both, where type A may be derived from acid-cured tissue and type B may be cured form lime-cured tissue. In some embodiments, the biopolymer may comprise gelatin, whey protein, chitosan, or combinations thereof.

Any suitable ratio of polymer and graphene may be employed. In some embodiments, a barrier film may be primarily polymer. For example, the ratio of polymer (such as polyvinyl alcohol) to graphene (such as graphene oxide) may be at least about 10:1 (polymer:graphene), at least about 100:1, at least about 500:1; or any other ratio bound by any of these values and may be up to about 2,000:1, up to about 10,000:1, up to about 100,000:1 or any other ratio bound by any of these values.

In some embodiments, the polymer comprises an aqueous solution of about 2% wt. to about 50% wt., about 2.5% wt. to about 30% wt., about 5% wt. to about 15% wt., or any other percentage bound by any of these values.

If desired, the polymer may be crosslinked. While not wanting to be limited by theory, it is believed that crosslinking the polymer may change the material properties of the polymer from hydrophilic to hydrophobic, improving moisture barrier performance. In some embodiments, the polymer may be crosslinked with a homobifunctional crosslinker, a crosslinker that has the same functional ends; a heterobifunctional crosslinker, a crosslinker that has different functional ends; or combinations thereof.

For a crosslinked composition comprising a graphene, a polymer, and a crosslinking group, a crosslinking group may connect: 1) a first polymer molecule to a second polymer molecule, 2) a graphene platelet to a polymer molecule, or 3) a first graphene platelet to a second graphene platelet. For more than one crosslinking groups, a combination of 1-3 is possible. For example, if there are two crosslinking groups they may connect:

a. 1) a first polymer molecule to a second polymer molecule and 2) a graphene platelet to a polymer molecule;

b. 1) a first polymer molecule to a second polymer molecule and 3) a first graphene platelet to a second graphene platelet; or

c. 2) a graphene platelet to a polymer molecule, or 3) a first graphene platelet to a second graphene platelet

For many embodiments, a crosslinked composition will include 1) a first crosslinking group connecting a first polymer molecule to a second polymer molecule, 2) a second crosslinking group connecting a graphene platelet to a polymer molecule, and 3) a third crosslinking group connecting a first graphene platelet to a second graphene platelet. For some embodiments, the first crosslinking group, the second crosslinking group, and the third crosslinking group may be the same type of crosslinking group or may be a product of the same crosslinker.

In some embodiments, the crosslinker may be an alkyl dialdehyde and/or an orthoalkyl silicate. In some embodiments, the dialdehyde may be adipaldehyde, glutaraldehyde or succinaldehyde. In some embodiments, the silane-based group may be a tetraalkyl orthosilicate. In some embodiments, the tetraalkyl orthosilicate may be tetramethyl orthosilicate, tetraethyl orthosilicate, tetraisopropyl orthosilicate, and/or tetra-*t*-butyl orthosilicate. In some embodiments, the cross-linker material may be derived from the graphene and/or the polymer. In some embodiments, applying electromagnetic radiation and/or chemical reactivity may modify the graphenes and/or polymers to create a crosslinking bridge of materials therebetween. In some embodiments, the crosslinker material may be separate and/or distinctive material added to the graphene and/or polymer, e.g., TEOS, TMOS, etc.

In some embodiments, the crosslinker material may comprise:

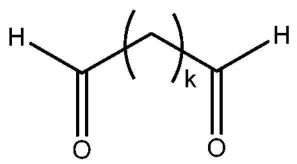

or

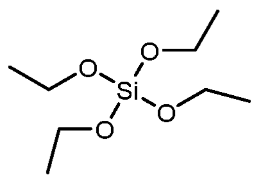

,

wherein k is 0, 1, 2, 3, 4, 5, 6, 7, 8, 9, 10, 11, or 12, e.g., can be 2 (succinaldehyde), 3 (glutaraldehyde) and/or 4

(adipaldehyde).

A barrier film may contain any suitable crosslinking group, such as a crosslinking group containing Si, O, N, or C. In some embodiments, a crosslinking group comprises silicon or oxygen, e.g. a Si-O bond, such as a silicon bond obtained by crosslinking with a silane compound. A crosslinking group may also contain carbon and oxygen, for example, and ether (-O-), ester ($-CO_2-$), or acetal linkage.

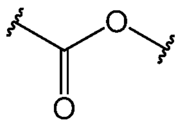

$-CO_2-$

An acetal linkage includes any linkage that includes a first oxygen atom and a second oxygen atom. Both the first oxygen atom and the second oxygen atom are geminally attached to a first carbon atom. The first oxygen atom is also attached to a second carbon atom, and the second oxygen atom is also attached to a third carbon atom, such as depicted in the formula below. The second carbon atom and the third carbon atom may be connected by a direct bond, or by a group, R. Alternatively, the second carbon atom may not be connected to the third carbon atom other than by the second oxygen atom-first carbon atom-first oxygen atom linkage.

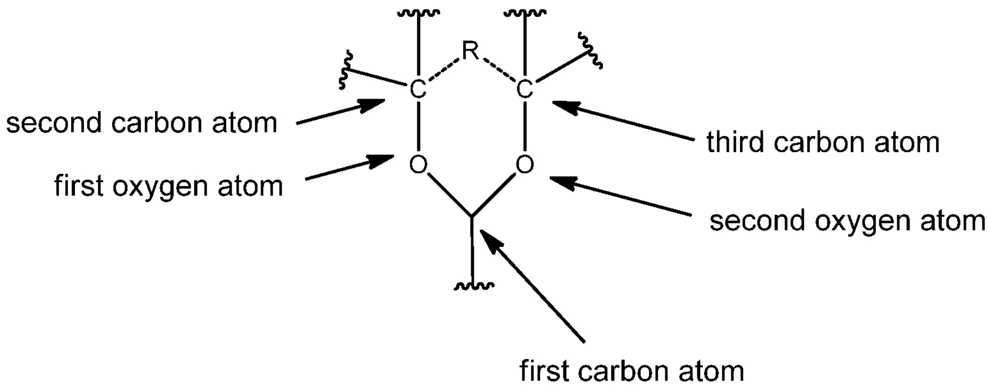


Some examples of acetals are included in the structures below. In these examples, G indicates a graphene platelet and Pol indicates a polymer.

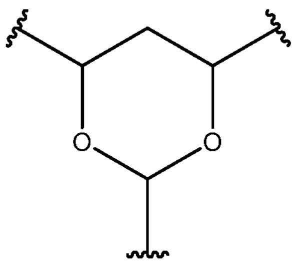
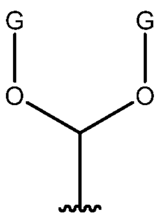
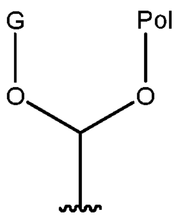
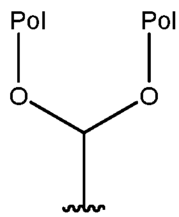

An acetal linkage may be formed from an aldehyde crosslinker. Dialdehydes, such as succinaldehyde, glutaraldehyde, or adipaldehyde, have the potential of forming two acetal linkages, one from each -COH functional group.

Crosslinking groups containing an Si-O bond may be obtained from silane based crosslinkers. In some embodiments, after crosslinking, a silane-based crosslinker, such as a crosslinker containing an Si-O bond, may be part of a structure such as:

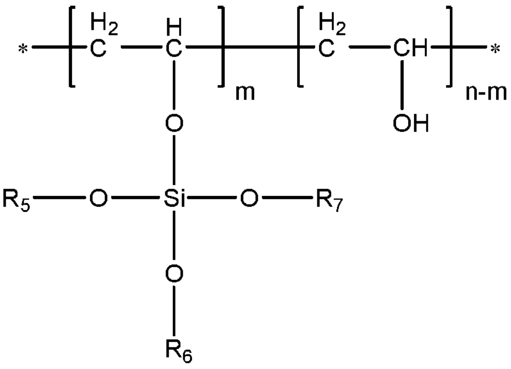

,

For example, the crosslinking group may be the $SiO(OR_5)(OR_6)(OR_7)$ moiety. With respect to the formula above, n and m are independently 0, 1, 2, 3, 4, 5, 6, 7, 8, 9, 10, 11, or 12, $R_5$, $R_6$, and $R_7$ can independently be H, $C_2H_5$, a polymer, or a graphene wherein at least two of $R_5$, $R_6$, and $R_7$ are either graphene or the polymer. In some embodiments, $n \geq m$.

In some embodiments, the crosslinking group may comprise a C-C moiety, a C-O moiety, a C-S moiety, a C-Si moiety, and/or a C-N moiety.

Any suitable amount of crosslinking group (such as a crosslinking group obtainable from glutaraldehyde, TEOS, or UV exposure) may be present in the in the crosslinked composition. In some embodiments, the crosslinking group may be about about 0.1-25%, about 1-10%, about 1-5%, about 5-10%, about 2.5%, about 5%, or about 10% by weight, based upon the total weight of the graphene, the polymer, and the crosslinking group.

In some embodiments, mixing a polymer solution, a graphene solution and a crosslinker solution further comprises adding sufficient acid to effect hydrolysis condensation. In some embodiments, about 0.05 ml to about 5 ml of 1N HCl may be added to about 1 gm to about 20 gm of 0.01% graphene oxide aqueous dispersion, about 1 g to about 20 g of 10% PVA aqueous solution, about 5% wt. to PVA, TEOS. For example, 11.5 g of the 0.01% graphene oxide aqueous dispersion may be added to a mixture of 11.5 g of 10% PVA aqueous solution (Aldrich, St. Louis, MO, USA); 0.065 g, or 5% wt to PVA, TEOS (Aldrich, St. Louis, MO, USA); and 0.2 mL 1N HCl aqueous solution.

In some embodiments, the crosslinked material comprises groups that are the product of ultraviolet radiation (UV) treatment of the barrier film resulting in displacement and reattachment of the atoms within the barrier film. While not wanting to be limited by theory, it is believed that during UV treatment, covalent bonds within the barrier film may be broken and the molecules will reattach, sometimes to other compounds, creating crosslinks without the necessity of adding a separate crosslinker as a precursor. While the crosslinks created during UV treatment and its associated crosslinking groups are derived from the other material within the barrier film, the crosslinks may inherently form different material within the fabricated barrier film. In some embodiments, the crosslinker may be derived from the polymer and/or the graphene. In other embodiments, a crosslinker precursor may be added before UV treatment, and thus, the resulting crosslinking group may be derived from the polymer, the graphene, and the crosslinker precursor. In some embodiments, the crosslinking groups may independently include: a C-C moiety, a C-O moiety, a C-S moiety, a C-Si moiety, and/or a C-N moiety. In some embodiments, the crosslinking group may comprise covalent linkages of or portions of tetraalkyl orthosilicates or alkyl dialdehydes. In some embodiments, the resulting crosslinker or crosslinking group may comprise alkanes, amines, alcohols, ethers, and combinations thereof.

In some embodiments, the barrier film may comprise a dispersant. In some embodiments, the dispersant may be an ammonium salt, e.g., $NH_4Cl$; FLOWLEN®; fish oil; long chain polymers; steric acid; oxidized Menhaden Fish Oil (MFO); a dicarboxylic acid such as but not limited to succinic acid, ethanedioic acid, propanedioic acid, pentanedioic acid, hexanedioic acid, heptanedioic acid, octanedioic acid, nonanedioic acid, decanedioic acid, o-phthalic acid, and p-phthalic acid; sorbitan monooleate; or a combination thereof. Some embodiments use oxidized MFO as a dispersant.

In some embodiments, the barrier film may further comprise at least a second organic binder. In some embodiments, the organic binders may be vinyl polymers. In some embodiments, the vinyl polymers may be polyvinyl butyral (PVB), polyvinyl alcohol (PVA), polyvinyl chloride (PVC), polyvinyl acetate (PVAc), polyacrylonitrile, mixtures thereof and copolymers thereof; polyethyleneimine; poly methyl methacrylate (PMMA); vinyl chloride-acetate; and combinations thereof. In some embodiments, the organic binder may be PVB.

Some barrier film may comprise a plasticizer. In some embodiments, a plasticizer may be Type 1 Plasticizers, which can generally decrease the glass transition temperature ($T_g$), e.g. make it more flexible and/or Type 2 Plasticizers, which can enable more flexible, more deformable layers, and perhaps reduce the amount of voids resulting from lamination.

Type 1 Plasticizers may include, but are not limited to, butyl benzyl phthalate, dicarboxylic/tricarboxylic ester-based plasticizers, such as, but not limited to, phthalate-based plasticizers such as, but not limited to, bis(2-ethylhexyl) phthalate, diisononyl phthalate, bis(n-butyl)phthalate, butyl benzyl phthalate, diisodecyl phthalate, di-n-octyl phthalate, diisooctyl phthalate, diethyl phthalate, diisobutyl phthalate, di-n-hexyl phthalate; adipate-based plasticizers such as, but not limited to, bis(2-ethylhexyl)adipate, dimethyl adipate, monomethyl adipate, dioctyl adipate; sebacate-based plasticizers such as, but not limited to, dibutyl sebacate, maleate; and combinations thereof.

Type 2 Plasticizers may include, but not limited to, dibutyl maleate, diisobutyl maleate, polyalkylene glycols such as, but not limited to, polyethylene glycol, polypropylene glycol and combinations thereof. Other plasticizers which may be used may include, but are not limited to, benzoates; epoxidized vegetable oils; sulfonamides such as, but not limited to, N-ethyl toluene sulfonamide, N-(2-hydroxypropyl)benzene sulfonamide, N-(n-butyl)benzene sulfonamide; organophosphates such as, but not limited to, tricresyl phosphate, tributyl phosphate; glycols/polyethers such as, but not limited to, triethylene glycol dihexanoate, tetraethylene glycol diheptanoate; alkyl citrates such as, but not limited to, triethyl citrate, acetyl triethyl citrate, tributyl citrate, acetyl tributyl citrate, trioctyl citrate, acetyl trioctyl citrate, trihexyl citrate, acetyl trihexyl citrate, butyryl trihexyl citrate, trimethyl citrate, alkyl sulphonic acid phenyl ester; and combinations thereof.

In some embodiments, solvents may also be present in the barrier film. Used in the manufacture of material layers, solvents include, but are not limited to, water; a lower alkanol such as, but not limited to, ethanol; methanol; isopropyl alcohol; xylenes; cyclohexanone; acetone; toluene and methyl ethyl ketone; and combinations thereof. Some embodiments use a mixture of xylenes and ethanol for solvents.

A barrier film may be relatively thin. For example, a barrier film may have a thickness in a range of about 1-100 μm, 2-50 μm, 5-20 μm, 10-20 μm, 10 μm, 11 μm, 14 μm, 19 μm, or any thickness in a range bounded by any of these values.

In some embodiments, the barrier film may be disposed between a substrate and a protective coating to create a barrier device. In some embodiments, the substrate and/or the protective coating may comprise a polymer. In some embodiments, the polymer may comprise vinyl polymers such as, but not limited to, polyvinyl butyral (PVB), polyvinyl alcohol (PVA), polyvinyl chloride (PVC), polyvinyl acetate (PVAc), polyacrylonitrile, and copolymers thereof; polyethyleneimine; poly methyl methacrylate (PMMA); vinyl chloride-acetate; and combinations thereof.

Some embodiments include a method for creating the aforementioned barrier film. One possible embodiment is illustrated in Figure 2. In some embodiments, graphene may be mixed with a polymer solution to form an aqueous mixture. In some embodiments the graphene may be in an aqueous solution. In some embodiments, the polymer may be in an aqueous solution. In some embodiments, two solutions are mixed, the mixing ratio may be between about 1:10 (graphene solution:polymer solution), about 1:4, about 1:2, about 1:1, about 2:1, about 4:1, about 10:1, or any other ratio bound by any of these values. Some embodiments preferably use a mixing ratio of about 1:1. In some embodiments, in addition to the two solutions, a crosslinker solution may also be added. In some embodiments, the graphene and polymer are mixed such that the dominant phase of the mixture comprises exfoliated nanocomposites. One reason for including the exfoliated-nanocomposites phase is that, in this phase, the graphene platelets are aligned such that permeability is reduced in the finished film by elongating the possible molecular pathways through the film. In some embodiments, the graphene composition may comprise any combination of the following: graphene, graphene oxide, and/or functionalized graphene or functionalized graphene oxide. In some embodiments, the graphene composition may be suspended in an aqueous solution of between about 0.001% wt and about 0.08% wt. Some embodiments may use a graphene concentration of about 0.01% wt of the solution. In some embodiments the polymer may comprise a polymer in about a 5% to about 15% aqueous solution. Some embodiments may comprise a polymer in about a 10% aqueous solution.

In some embodiments, the mixture may be blade coated on a substrate to create a thin film between about 5 μm to about 30 μm, e.g., may then cast on a substrate to form a partial element. In some embodiments, the casting may be done by co-extrusion, film deposition, blade coating or any other method for deposition of a film on a substrate known to those skilled in the art. In some embodiments, the mixture may be cast onto a substrate by blade coating (or tape casting) by using a doctor blade and dried to form a partial element. The thickness of the resulting cast tape may be adjusted by changing the gap between the doctor blade and the moving substrate. In some embodiments, the gap between the doctor blade and the moving substrate may be in the range of about 0.002 mm to about 1.0 mm, about 0.20 mm to about 0.50 mm, or any other gap bound by any of these values. Meanwhile, the speed of the moving substrate may have a rate in the range of about 30 cm/min. to about 600 cm/min. By adjusting the moving substrate speed and the gap between the blade and moving substrate, the thickness of the resulting graphene polymer layer may be expected to be between about 5 μm and about 30 μm. In some embodiments, the thickness of the layer may be about 10 μm such that transparency is maintained. The result is a barrier film.

In some embodiments, after deposition of the graphene layer on the substrate, the barrier film may be then dried to remove the underlying solution from the graphene layer. In some embodiments, the drying temperature may be about at room temperature, or 20 °C, to about 120 °C. In some embodiments the drying time may range from about 15 minutes to about 72 hours depending on the temperature. The purpose is to remove any water and precipitate the cast

form. In some embodiments, drying may be accomplished at temperatures of about 90 °C for about 30 minutes.

In some embodiments, the method comprises drying the mixture for about 15 minutes to about 72 hours at a temperature ranging between from about 20°C to about 120°C. In some embodiments, the dried barrier film may be isothermally crystallized, and/or annealed. In some embodiments, annealing may be done from about 10 hours to about 72 hours at an annealing temperature of about 40 °C to about 200 °C. In some embodiments, annealing may be accomplished at temperatures of about 100 °C for about 18 hours. Other embodiments prefer annealing done for 16 hours at 100 °C.

In some embodiments, the barrier film may then optionally irradiated with ultraviolet (UV) radiation (about 10 nm to about 420 nm) in a UV treatment in order to cause crosslinking between the barrier's precursors. In some embodiments the barrier film may be irradiated with a UV source with an intensity at the element of about 0.001 W/cm$^2$ to about 100 W/cm$^2$ for a duration of between about 15 minutes and about 15 hours. In some embodiments, the barrier film may be irradiated with a UV source with an intensity at the element of about 0.01 W/cm$^2$ to 50 W/cm$^2$ for a duration of between about 30 minutes and about 10 hours. In some embodiments, the barrier film may be irradiated with a UV source of intensity at the element of about 0.06 W/cm$^2$ for a duration of about 2 hours. In some embodiments, a 300 W lamp at a distance of 20 cm with generally spherical irradiance may provide an intensity of about 0.005 W/cm$^2$.

After annealing and optional UV-treatment, the barrier film may be then optionally laminated with a protective coating layer, such that the graphene layer may be sandwiched between the substrate and the protective layer. The method for adding layers may be by co-extrusion, film deposition, blade coating or any other method known by those skilled in the art. In some embodiments, additional layers may be added to enhance the properties of the barrier. In some embodiments, the protective layer may be secured to the graphene with an adhesive layer to the barrier film to yield the barrier device. In other embodiments, the barrier film directly yields the barrier device.

In some embodiments, as seen in Figures 1A-1C, barrier devices, **100, 200,** and **300** comprise at least a substrate element, **120,** and the aforementioned barrier film, **110.** Figures 1B and 1C shows an optional protective coating, **130,** on top of the barrier film. Figure 1C shows optional additional layers between the outer protective layer and the barrier film, such as an adhesive layer, **210.** As a result of the layers, the barrier device may provide a transparent yet durable packaging system that may be both gas and water resistant.

## Embodiments

The following embodiments are contemplated:

Embodiment 1. A barrier film comprising a crosslinked composition comprising a graphene, a polymer, and a crosslinking group.

Embodiment 1a. The barrier film of embodiment 1, wherein the crosslinking group comprises 1) carbon or silicon, and 2) oxygen.

Embodiment 2. The barrier film of embodiment 1 or 1a, wherein the film has a visible light transmission of at least about 60%.

Embodiment 3. The barrier film of embodiment 1, 1a or 2, wherein the film is a barrier to the passage of moisture.

Embodiment 4. The barrier film of embodiment 1, 1a, 2, or 3, wherein the film is a barrier to the passage of gases.

Embodiment 5. The barrier film of embodiment 1, 1a, 2, 3, or 4, wherein the crosslinking group comprises silicon.

Embodiment 6. The barrier film of embodiment 5, wherein the crosslinking group comprises a Si-O bond.

Embodiment 7. The barrier film of embodiment 1, 1a, 2, 3, 4, 5, or 6, wherein the crosslinking group comprises oxygen (or carbon and oxygen).

Embodiment 8. The barrier film of embodiment 7, wherein the crosslinking group comprises an acetal linkage.

Embodiment 9. The barrier film of embodiment 1, 1a, 2, 3, 4, 5, 6, 7, or 8, wherein the crosslinking group connects two polymer molecules.

Embodiment 10. The barrier film of embodiment 1, 1a, 2, 3, 4, 5, 6, 7, 8, or 9, wherein the crosslinking group connects a graphene platelet to a polymer molecule.

Embodiment 11. The barrier film of embodiment 1, 1a, 2, 3, 4, 5, 6, 7, 8, 9, or 10, wherein the crosslinking group connects two graphene platelets.

Embodiment 12. The barrier film of embodiment 9, wherein a second crosslinking group connects a graphene platelet to a polymer molecule.

Embodiment 13. The barrier film of embodiment 9 or 12, wherein a second crosslinking group or a third crosslinking group connects two graphene platelets.

Embodiment 14. The barrier film of embodiment 1, 2, 3, 4, 5, 6, 7, 8, 9, 10, 11, 12, or 13, wherein the crosslinking group is formed from a tetraalkyl orthosilicate or an alkyl dialdehyde.

Embodiment 15. The barrier film of embodiment 14, wherein the crosslinking group is formed from a tetraalkyl orthosilicate.

Embodiment 16. The barrier film of embodiment 15, wherein the tetraalkyl orthosilicate comprises tetraethyl orthosilicate, tetramethyl orthosilicate, tetraisopropyl orthosilicate, or tetra-*t*-butyl orthosilicate.

Embodiment 17. The barrier film of embodiment 14, wherein the crosslinking group is formed from an alkyl dialdehyde.

Embodiment 18. The barrier film of embodiment 17, wherein the alkyl dialdehyde is succinaldehyde or glutaraldehyde.

Embodiment 19. The barrier film of embodiment 1, 1a, 2, 3, 4, 5, 6, 7, 8, 9, 10, 11, 12, or 13, wherein the crosslinking group is formed by exposing the graphene and the polymer to UV radiation.

Embodiment 20. The barrier film of embodiment 14, 15, 16, 17, or 18, wherein the crosslinking group is formed by exposing the graphene and the polymer to UV radiation.

Embodiment 21. The barrier film of embodiment 1, 1a, 2, 3, 4, 5, 6, 7, 8, 9, 10, 11, 12, 13, 14, 15, 16, 17, 18, 19, or 20, wherein the polymer is polyvinyl alcohol or a biopolymer.

Embodiment 22. The barrier film of embodiment 21, wherein the polymer is polyvinyl alcohol.

Embodiment 23. The barrier film of embodiment 21, wherein the biopolymer comprises gelatin, whey protein, or chitosan.

Embodiment 24. The barrier film of embodiment 1, 1a, 2, 3, 4, 5, 6, 7, 8, 9, 10, 11, 12, 13, 14, 15, 16, 17, 18, 19, 20, 21, 22, 23, or 24, wherein the graphene comprises an amide, a sulfonyl, a carbonyl, an alkylamino, or an alkoxy functional group.

Embodiment 25. The barrier film of embodiment 1, 1a, 2, 3, 4, 5, 6, 7, 8, 9, 10, 11, 12, 13, 14, 15, 16, 17, 18, 19, 20, 21, 22, 23, 24, or 25, wherein the graphene comprises a reduced graphene oxide or a graphene oxide.

Embodiment 26. The barrier film of embodiment 22 or 25, wherein the graphene is graphene oxide.

Embodiment 27. The barrier film of embodiment 1, 1a, 2, 3, 4, 5, 6, 7, 8, 9, 10, 11, 12, 13, 14, 15, 16, 17, 18, 19, 20, 21, 22, 23, 24, 25, or 26, wherein the mass percentage of the graphene is between about 0.001% wt and 90% wt, based upon the total mass of the graphene, the polymer, and the crosslinking group.

Embodiment 28. The barrier film of embodiment 1, 1a, 2, 3, 4, 5, 6, 7, 8, 9, 10, 11, 12, 13, 14, 15, 16, 17, 18, 19, 20, 21, 22, 23, 24, 25, 26, 27, or 28, having a thickness of about 2 μm to about 50 μm.

Embodiment 29. The barrier film of embodiment 1, 1a, 2, 3, 4, 5, 6, 7, 8, 9, 10, 11, 12, 13, 14, 15, 16, 17, 18, 19, 20, 21, 22, 23, 24, 25, 26, 27, or 28, wherein the ratio of polymer to graphene is about 100:1 (polymer:graphene) to about 10,000:1.

Embodiment 30. The barrier film of embodiment 15, 17, 18, 20, or 22, wherein the ratio of polymer to graphene is about 100:1 (polymer:graphene) to about 10,000:1.

Embodiment 31. The barrier film of embodiment 1, 1a, 2, 3, 4, 5, 6, 7, 8, 9, 10, 11, 12, 13, 14, 15, 16, 17, 18, 19, 20, 21, 22, 23, 24, 25, 26, 27, 28, 29, or 30, wherein the crosslinking group is about 0.1% to about 25% by weight, based upon the total weight of the graphene, the polymer, and the crosslinking group.

Embodiment 32. A gas-barrier barrier device comprising the barrier film of embodiment 1, 1a, 2, 3, 4, 5, 6, 7, 8, 9, 10, 11, 12, 13, 14, 15, 16, 17, 18, 19, 20, 21, 22, 23, 24, 25, 26, 27, 28, 29, 30, or 31.

Embodiment 33. The gas-barrier device of embodiment 32, further comprising a substrate, wherein the barrier film is disposed upon the substrate.

Embodiment 34. The gas-barrier device of embodiment 32 or 33, further comprising a protective coating disposed upon the barrier film.

Embodiment 35. A method for making a transparent, nano-composite moisture-and-gas barrier film comprising:

(a) mixing a polymer, a graphene, and a crosslinker in an aqueous mixture;
(b) blade coating the mixture on a substrate to create a thin film having a thickness in a range of about 5 μm to about 30 μm;
(c) drying the mixture for about 15 minutes to about 72 hours at a temperature in a range of about 20 °C to about 120°C; and
(d) annealing the resulting coating for about 10 hours to about 72 hours at a temperature in a range of about 40 °C to about 200 °C.

Embodiment 36. The method of embodiment 35, wherein the aqueous mixture further comprises sufficient acid to effect a hydrolysis condensation.

Embodiment 37. The method of embodiment 35 or 36, further comprising irradiating the barrier film to UV-radiation for 15 minutes to 15 hours at a surface intensity of about 0.001 $W/cm^2$ to about 100 $W/cm^2$.

Embodiment 38. The method of embodiment 35, 36, or 37, further comprising coating the resulting barrier film with a protecting coating to yield a barrier device.

## EXAMPLES

Some embodiments of the barrier films described herein have improved permeability resistance to both oxygen gas and vapor with acceptable material properties and transparency as compared to other barrier films. These benefits are further shown by the following examples, which are intended to be illustrative of the embodiments of the disclosure, but are not intended to limit the scope or underlying principles in any way.

### Example 1: Preparation of Barrier Film with 2.5% wt. Glutaraldehyde Crosslinker

In Example 1, Barrier Film 1 (**BE-1**) was prepared by following the method outlined above for synthesizing a nanocomposite barrier film using materials that would result in a Barrier Film comprising a Glutaraldehyde (GA) crosslinker. The overall process used in Example 1 is depicted in Figures 1A-1C. **Error! Reference source not found..**

First, 4 mg/mL of a graphene oxide (GO) aqueous dispersion (Graphenea, Cambridge, MA, USA) was diluted to 0.01% by de-ionized water. Then, 10.0 g of the resulting 0.01% graphene oxide aqueous dispersion was added to a mixture consisting of 10.0 g of 10% PVA aqueous solution (Aldrich, St. Louis, MO, USA), 0.1 mL of 25% aqueous solution glutaraldehyde (GA) (Aldrich, St. Louis, MO, USA), and 0.1 mL of 1N HCl aqueous solution (Aldrich, St. Louis, MO, USA). The resulting mixture was then was stirred at room temperature for 16 h.

The resulting solution was tape cast onto a 125 μm thick poly(ethylene terephthalate) (PET) substrate (E Plastics, San Diego, CA, USA) using a casting knife with a gap of 300 μm. Afterward, the substrate was put in an oven at 90 °C for 30 min in order to remove any water and to precipitate the cast film, resulting in a film that was 10 μm thick. The resulting PVA/GO/2.5wt%GA/PET composite element was then annealed in an oven at 100 °C for 18 h to yield **BE-1**.

### Example 2: Preparation of Barrier Film with 5.0% wt. Glutaraldehyde Crosslinker

In Example 2, Barrier Film 2 **(BE-2)** was made in a similar manner as in Example 1, with the exception that for the 25% aqueous solution glutaraldehyde (GA) (Aldrich, St. Louis, MO, USA), 0.2 mL was used instead of 0.1 mL. The

result is that a PVA/GO/5wt%GA/PET composite element created (**BE-2**.

Example 3: Preparation of Barrier Film with 10.0% wt. Glutaraldehyde Crosslinker

In Example 3, Barrier Film 3 **(BE-3)** was made in a similar manner as in Example 1, with the exception that for the 25% aqueous solution glutaraldehyde (GA) (Aldrich, St. Louis, MO, USA), 0.4 mL was used instead of 0.1 mL. The result is that a PVA/GO/10wt%GA/PET composite element created **BE-3**.

Example 4: Preparation of Barrier Film with 5.0% wt. TEOS Crosslinker

In Example 4, Barrier Film 4 (**BE-4**) was prepared by following the method outlined above for synthesizing a nanocomposite barrier film using materials that would result in a barrier film comprising a TEOS crosslinker. First, 4 mg/mL of a graphene oxide aqueous dispersion (Graphenea, Cambridge, MA, USA) was diluted to 0.01% by de-ionized water. Then, 11.5 g of the 0.01% graphene oxide aqueous dispersion was then added to a mixture of 11.5 g of 10% PVA aqueous solution (Aldrich, St. Louis, MO, USA); 0.065 g, or 5% wt. to PVA, TEOS (Aldrich, St. Louis, MO, USA); and 0.2 mL 1N HCl aqueous solution (Aldrich, St. Louis, MO, USA). The resulting mixture was then was stirred at room temperature for 1 h.

The mixture was then tape cast onto a 125 μm PET substrate (E Plastics, San Diego, CA, USA) using a casting knife with a gap of 300 μm. Afterward, the substrate was put in an oven at 90 °C for 1 h to remove the water and to precipitate the cast film, resulting in a 10 μm thick film. The PVA/GO/silicate crosslinking (5 wt.%)/PET composite was then annealed in an oven at 100 °C for 16 h to yield Example 4, or **BE-4**.

Example 5: Preparation of Barrier Film with UV Generated Crosslinker

In Example 5, a Barrier Film (**BE-5**) was prepared by following the method outlined above for synthesizing a nanocomposite barrier film but made without any precursor crosslinker materials. First, 4 mg/mL of a graphene oxide aqueous dispersion (Graphenea, Cambridge, MA, USA) was diluted to 0.01% by de-ionized water. Then, 11.5 g of the resulting 0.01% graphene oxide aqueous dispersion was stirred with 11.5 g of 10% PVA aqueous solution (Aldrich, St. Louis, MO, USA) at room temperature for 1 h to create a mixture. The mixture was then tape-cast onto a 125 μm PET substrate (E Plastics, San Diego, CA, USA) using a casting knife with a gap of 300 μm. Afterward, the substrate was put in an oven at 90 °C for 1 h to remove the water and to precipitate the cast film. The result was a film that was 10 μm thick. The resulting PVA/GO/PET composite was heated in an oven at 100 °C for 16 h to anneal the coating.

After annealing the resulting composite was then irradiated with a 300 W UV source (Mercury Lamp) at a distance of 20 cm for 2 h to yield **BE-5**.

Comparative Example 1: Barrier Film Without Crosslinking CBE-1

In Comparative Example 1, a Comparative Barrier Film (**CBE-1**) was prepared by following the method outlined above for synthesizing a nanocomposite barrier film but made without any crosslinker materials. First, 4 mg/mL of a graphene oxide aqueous dispersion (Graphenea, Cambridge, MA, USA) was diluted to 0.01% by de-ionized water. Then, 11.5 g of the resulting 0.01% graphene oxide aqueous dispersion was stirred with 11.5 g of 10% PVA aqueous solution (Aldrich, St. Louis, MO, USA) at room temperature for 1 h to create a mixture. The mixture was then tape-cast onto a 125 μm PET substrate (E Plastics, San Diego, CA, USA) using a casting knife with a gap of 300 μm. Afterward, the substrate was put in an oven at 90 °C for 1 h to remove the water and to precipitate the cast film. The result was a film that was 10 μm thick. The resulting PVA/GO/PET composite was heated in an oven at 100 °C for 16 h to anneal the coating to give **CBE-1**.

Example 6: Measurement of Barrier Films

The barrier films identified in Examples 1 thru 5 and Comparative Example 1 were each examined to determine their optical characteristics as identified in their respective sections. The transparency of the barrier examples was measured by adapting the methods taught in U.S. Patent No. 8,169,136. The transparency of the barrier films were measured by high sensitivity multi channel photo detector (MCPD 7000, Otsuka Electronics Co., Ltd., Osaka, JP). First, a glass plate was irradiated with continuous spectrum light from a halogen lamp source (150 W, MC2563, Otsuka Electronics Co., Ltd.) to obtain reference transmission data. Next, each barrier film was placed on the reference glass and irradiated to determine transparency. The resulting transmission spectrum was acquired by the photo detector (MCPD) for each sample. In this measurement, each barrier film on the glass plate was coated with paraffin oil having the same refractive index as the glass plate. The transmittance at 800 nm wavelength of light was used as a quantitative

measure of transparency. The results of the transparency measurements are presented in Table 1.

Next, the barrier examples identified in Examples 1 and 4 as well as Comparative Example 1 were subjected to a swelling test to quantify the relative barrier effectiveness. Permeation of water through the example is proportional to its permeability. The permeability of the example is inversely proportional to its barrier effectiveness. The swelling test measures the relative evaporation of water from within the film by first uniformly saturating each film such that each film had the same amount of retained water and then allowing each one to be exposed to dry air to determine the relative permeability of water by measuring the lost mass due to evaporation. A figure of merit was defined to be the degree of swelling as defined by Equation 1:

$$Degree\ of\ Swelling\ [\%] = \frac{W_{SWOLLEN} - W_{DRY}}{W_{DRY}},$$

Equation 1

where W is the weight of the film. The barrier examples were peeled from the PET substrate and cut into 0.5 cm × 1.0 cm swatches. The resulting swatches, identical in size, were then soaked in water for 10 d at room temperature. When removed the swatches were dabbed with filter paper to remove any excess water and the Swollen Weight was promptly recorded. Then, the water impregnated swatches were then transferred to a vacuum oven (TBD manufacturer, model: VWR 1400E) where the samples were dried at about 100 C for about 3 h. After removal, the swatches were promptly weighed to obtain their Dry Weight. The relative results of the swelling test are presented in Table 1. In some embodiments, the degree of swelling of a barrier film according to this procedure is less than 50%, less than 30%, about 10-30%, about 10-15%, about 15-20%, or about 20-30%, or any other percentage bound by any of these values.

The barrier film's effectiveness in Examples 1 thru 5 was also measured by performing a calcium-lifetime test which tests the water's permeability through the membrane. It is well known in the art that when pure calcium metal, which is visible, is exposed to water it forms calcium hydroxide ($Ca(OH)_2$), a colorless crystal, and hydrogen gas. To exploit this reaction to determine relative moisture permeability of the samples, pure calcium metal was heated to deposit on a class cover to form a 200 nm thick calcium film. The glass cover with calcium film was then encapsulated using a UV-curable epoxy resin (Epoxy Technology, Inc., Billerica, MA, USA) with the pre-dried barrier films in an inert atmosphere ($N_2$ gas). A control sample was also constructed by the same method using a barrier film constructed of glass. Then, the resulting samples were then exposed to ambient conditions at 21 °C and 45% relative humidity to measure the calcium lifetime. The life time was determined when the calcium which was a dark metallic color had mostly converted to calcium hydroxide, quantified when the sample became transparent. The relative results of the calcium lifetime test are presented in Table 1. In some embodiments, the calcium lifetime of a barrier film according to this test is at least about 20 h, at least about 30 hours, at least about 50 hours, at least about 100 hours, or any other duration bound by any of these values.

**Table 1: Transparency, Degree of Swelling, and Ca Lifetime for Various Examples.**

| ID# | Description | Film Thickness [μm] | T% | Degree of Swelling [%] | Calcium Lifetime [hours] |
|---|---|---|---|---|---|
| CPE-1 | Control - No Crosslinker | 10 | 85.0 | 238 | 52 |
| BE-1 | 2.5 wt. %GA Crosslinker | 19 | 81.4 | 13 | 110 |
| BE-2 | 5.0 wt. % GA Crosslinker | 11 | 85.7 | 14 | 56 |
| BE-3 | 10.0 wt. % GA Crosslinker | 10 | 87.5 | 15 | 25 |
| BE-4 | 5.0 wt. % TEOS Crosslinker | 10 | 27.3 | 12 | 61 |
| BE-5 | UV Crosslink (0.06 W/cm$^2$, 2 hrs) | 14 | 84.4 | 21 | 108 |

Example 7

Samples CPE-1, BE-1 and BE-4, made as described in Example 6 were tested for oxygen transmission rate (OTR) as described in ASTM International Standard D-3985, at 23 °C and 0% relative humidity (RH) for a period of

about 2 d using a OX-TRAN® 2/21 oxygen permeability Instrument (MOCON, Minneapolis, MN, USA). The results are shown in Table 2 below.

Table 2

| ID# | Description | Film Thickness [μm] | OTR (cc/m2-day) @23 °C, 0%RH |
|---|---|---|---|
| CPE-1 | Control - No Crosslinker | 10 | <0.005 |
| BE-1 | 2.5 wt. % GA Crosslinker | 10 | <0.005 |
| BE-4 | 5.0 wt. % TEOS Crosslinker | 10 | <0.005 |

Example 8

Samples CPE-1, BE-1, and BE-4, made as described in Example 6 were tested for water vapor transmission rate (WVTR) as described in ASTM International Standard F1249, at 40 °C and 90% relative humidity (RH) for a period of about 2 days using a PERMATRAN-W® 3/33 water vapor permeability Instrument (Mocon, Minneapolis, MN, USA). The results are shown in Table 3 below.

Table 3

| ID# | Description | Film Thickness [μm] | WVTR (gm/m2-day) @40 °C, 90%RH |
|---|---|---|---|
| CPE-1 | Control - No Crosslinker | 10 | 2.3 |
| BE-1 | 2.5 wt.% GA Crosslinker | 10 | 2.2 |
| BE-4 | 5.0 wt.% TEOS Crosslinker | 10 | 2.1 |

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained. At the very least, and not as an attempt to limit the application of the doctrine of equivalents to the scope of the claims, each numerical parameter should at least be construed in light of the number of reported significant digits and by applying ordinary rounding techniques.

The terms "a," "an," "the" and similar referents used in the context of describing the invention (especially in the context of the following claims) are to be construed to cover both the singular and the plural, unless otherwise indicated herein or clearly contradicted by context. All methods described herein may be performed in any suitable order unless otherwise indicated herein or otherwise clearly contradicted by context. The use of any and all examples, or exemplary language (e.g., "such as") provided herein is intended merely to better illuminate the invention and does not pose a limitation on the scope of any claim. No language in the specification should be construed as indicating any non-claimed element essential to the practice of the invention.

**Claims**

1. A barrier film comprising a crosslinked composition comprising a graphene oxide, a polyvinyl alcohol polymer, and a crosslinking group; wherein the crosslinking group connects a graphene oxide platelet to the polyvinyl alcohol, and the crosslinking group is formed from a tetraalkyl orthosilicate, an alkyl dialdehyde, or by exposing the graphene oxide and the polymer to UV radiation without a crosslinker; whereby the film is a barrier to the passage of moisture and gases.

2. The barrier film of claim 1, wherein the crosslinking group is formed from a tetraalkyl orthosilicate.

3. The barrier film of claim 1, wherein the crosslinking group is formed from an alkyl dialdehyde.

4. The barrier film of claim 1, wherein the graphene oxide comprises a reduced graphene oxide.

5. The barrier film of claim 1, having a thickness of 2 μm to 50 μm.

6. The barrier film of claim 1, wherein the ratio of polymer to graphene oxide is 100:1 to 10,000:1.

7. The barrier film of claim 1, wherein the crosslinking group is 0.1% to 25% by weight, based upon the total weight of the graphene oxide, the polymer, and the crosslinking group.

8. A gas-barrier device comprising the barrier film of claim 1.

9. The gas-barrier device of claim 8, further comprising a substrate, wherein the barrier film is disposed upon the substrate.

10. A method for making the barrier film of claim 1, the method comprising:

a. mixing a polymer, a graphene oxide, and a crosslinker in an aqueous mixture;
b. blade coating the mixture on a substrate;
c. drying the coated mixture for 15 minutes to 72 hours at a temperature in a range of 20 °C to 120 °C; and
d. annealing the resulting coating for 10 hours to 72 hours at a temperature in a range of 40 °C to 200 °C to create a thin film having a thickness in the range of 5 μm to 30 μm.

11. The method of claim 10, wherein the aqueous mixture further comprises an acid; wherein the acid is hydrochloric acid; and wherein the hydrochloric acid is present in an amount of 0.0025 millimoles per 1 g of 0.01% graphene oxide aqueous dispersion to 5 millimoles per 1 g of 0.01% graphene oxide aqueous dispersion.

12. The method of claim 10, further comprising irradiating the barrier film to UV-radiation for 15 minutes to 15 hours at a surface intensity of 0.001 $W/cm^2$ to 100 $W/cm^2$.

## Patentansprüche

1. Barrierefilm, umfassend eine quervernetzte Zusammensetzung, die ein Graphenoxid, ein Polyvinylalkoholpolymer und eine Quervernetzungsgruppe umfasst; wobei die Quervernetzungsgruppe ein Graphenoxidplättchen mit dem Polyvinylalkohol verbindet und die Quervernetzungsgruppe aus einem Tetraalkylorthosilikat, einem Alkyldialdehyd oder durch Exposition des Graphenoxids und des Polymers gegenüber UV-Strahlung ohne einen Quervernetzer gebildet ist; wobei der Film eine Barriere für den Durchgang von Feuchtigkeit und Gasen ist.

2. Barrierefilm nach Anspruch 1, wobei die Quervernetzungsgruppe aus einem Tetraalkylorthosilikat gebildet ist.

3. Barrierefilm nach Anspruch 1, wobei die Quervernetzungsgruppe aus einem Alkyldialdehyd gebildet ist.

4. Barrierefilm nach Anspruch 1, wobei das Graphenoxid ein reduziertes Graphenoxid umfasst.

5. Barrierefilm nach Anspruch 1, der eine Dicke von 2 μm bis 50 μm hat.

6. Barrierefilm nach Anspruch 1, wobei das Verhältnis von Polymer zu Graphenoxid 100:1 bis 10.000:1 ist.

7. Barrierefilm nach Anspruch 1, wobei die Quervernetzungsgruppe 0,1 Gew.-% bis 25 Gew.-% beträgt, basierend auf dem Gesamtgewicht des Graphenoxids, des Polymers und der Quervernetzungsgruppe.

8. Gasbarrierevorrichtung, umfassend den Barrierefilm nach Anspruch 1.

9. Gasbarrierevorrichtung nach Anspruch 8, ferner umfassend ein Substrat, wobei der Barrierefilm auf dem Substrat angeordnet ist.

10. Verfahren zur Herstellung des Barrierefilms nach Anspruch 1, wobei das Verfahren umfasst:

a. Mischen eines Polymers, eines Graphenoxids und eines Quervernetzers in einem wässrigen Gemisch;
b. Bladestrich-Auftragen des Gemisches auf einem Substrat;
c. Trocknen des aufgetragenen Gemisches über 15 Minuten bis 72 Stunden bei einer Temperatur in einem Bereich von 20°C bis 120°C; und

d. Härten der entstandenen Beschichtung über 10 Stunden bis 72 Stunden bei einer Temperatur in einem Bereich von 40°C bis 200°C, um einen dünnen Film zu erzeugen, der eine Dicke im Bereich von 5 μm bis 30 μm hat.

**11.** Verfahren nach Anspruch 10, wobei das wässrige Gemisch ferner eine Säure umfasst; wobei die Säure Chlorwasserstoffsäure ist; und wobei die Chlorwasserstoffsäure in einer Menge von 0,0025 Millimol pro 1 g 0,01%ige wässrige Dispersion von Graphenoxid bis 5 Millimol pro 1 g 0.01%ige wässrige Dispersion von Graphenoxid vorhanden ist.

**12.** Verfahren nach Anspruch 10, ferner umfassend das Bestrahlen des Barrierefilms mit UV-Strahlung über 15 Minuten bis 15 Stunden bei einer Oberflächenintensität von 0,001 $W/cm^2$ bis 100 $W/cm^2$.

**Revendications**

**1.** Film barrière comprenant une composition réticulée qui comprend un oxyde de graphène, un polymère d'alcool polyvinylique et un groupe de réticulation ; dans lequel le groupe de réticulation relie une plaquette d'oxyde de graphène à l'alcool polyvinylique et le groupe de réticulation est formé à partir d'un orthosilicate de tétraalkyle, un dialdéhyde alkylique, ou en exposant l'oxyde de graphène et le polymère à un rayonnement UV sans agent de réticulation ; le film étant ainsi une barrière au passage de l'humidité et des gaz.

**2.** Film barrière selon la revendication 1, dans lequel le groupe de réticulation est formé à partir d'un orthosilicate de tétraalkyle.

**3.** Film barrière selon la revendication 1, dans lequel le groupe de réticulation est formé à partir d'un dialdéhyde alkylique.

**4.** Film barrière selon la revendication 1, dans lequel l'oxyde de graphène comprend un oxyde de graphène réduit.

**5.** Film barrière selon la revendication 1, ayant une épaisseur de 2 μm à 50 μm.

**6.** Film barrière selon la revendication 1, dans lequel le ratio du polymère sur l'oxyde de graphène va de 100:1 à 10 000:1.

**7.** Film barrière selon la revendication 1, dans lequel le groupe de réticulation va de 0,1 % à 25 % en poids, rapporté au poids total de l'oxyde de graphène, du polymère et du groupe de réticulation.

**8.** Dispositif de barrière aux gaz comprenant le film barrière selon la revendication 1.

**9.** Dispositif de barrière aux gaz selon la revendication 8, comprenant en outre un substrat, dans lequel le film barrière est disposé sur le substrat.

**10.** Procédé de fabrication du film barrière selon la revendication 1, le procédé comprenant :

a. le mélangeage d'un polymère, d'un oxyde de graphène et d'un agent de réticulation dans un mélange aqueux ;
b. le couchage à la lame du mélange sur un substrat ;
c. le séchage du mélange couché pendant 15 minutes à 72 heures à une température dans la plage de 20 °C à 120 °C ; et
d. le recuit du couchage résultant pendant 10 heures à 72 heures à une température dans la plage de 40 °C à 200 °C pour créer un film mince ayant une épaisseur dans la plage de 5 μm à 30 μm.

**11.** Procédé selon la revendication 10, dans lequel le mélange aqueux comprend en outre un acide ; dans lequel l'acide est l'acide chlorhydrique ; et dans lequel l'acide chlorhydrique est présent en une quantité allant de 0,0025 millimoles pour 1 g de dispersion aqueuse d'oxyde de graphène à 0,01 % à 5 millimoles pour 1 g de dispersion aqueuse d'oxyde de graphène à 0,01 %.

**12.** Procédé selon la revendication 10, comprenant en outre l'exposition du film barrière à un rayonnement UV pendant 15 minutes à 15 heures à une intensité surfacique allant de 0,001 $W/cm^2$ à 100 $W/cm^2$.

FIG. 1A

FIG. 1B

FIG. 1C

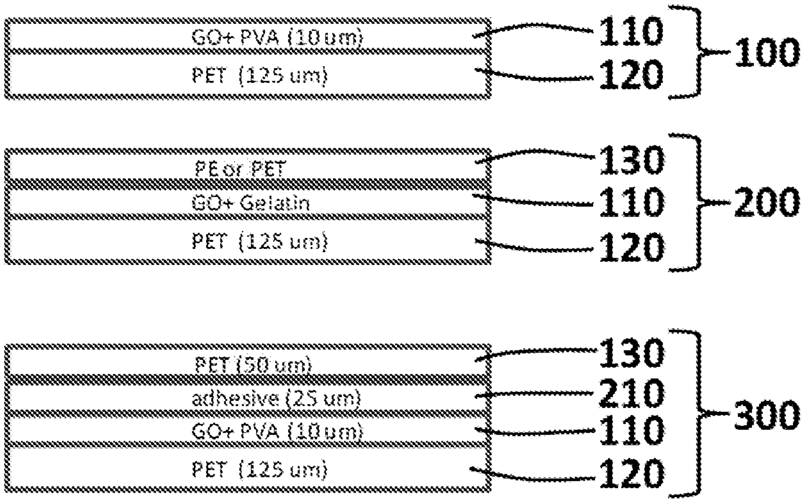

FIG. 2

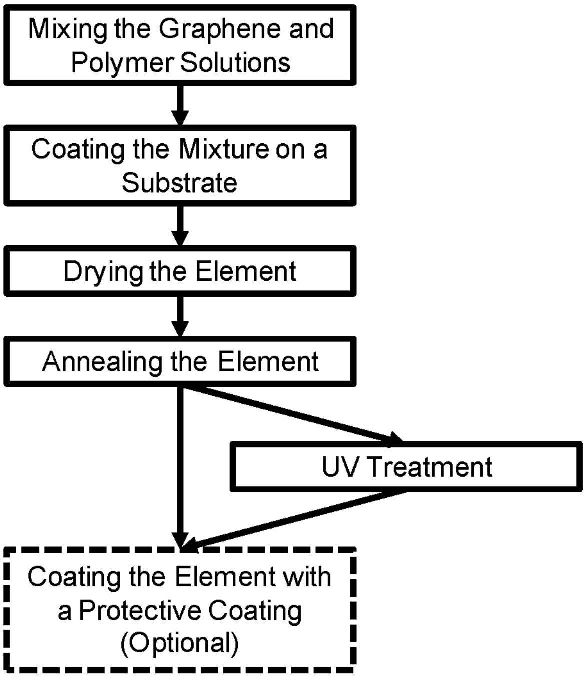
Mixing the Graphene and Polymer Solutions
Coating the Mixture on a Substrate
Drying the Element
Annealing the Element
UV Treatment
Coating the Element with a Protective Coating (Optional)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011200825 A, Chakraborty Soma
- WO 9601736 A
- WO 2014144139 A
- US 20140272350 A
- US 8169136 B

### Non-patent literature cited in the description


- **CARIA, P. F.** Ca test of Al2O3 gas diffusion barriers grown by atomic deposition on polymers. *Applied Physics Letters,* 2006, (89, 031915-1-031915-3